(19) Europäisches Patentamt
European Patent Office
Office européen des brevets

(11) Veröffentlichungsnummer: **0 292 433 B1**

(12) # EUROPÄISCHE PATENTSCHRIFT

(45) Veröffentlichungstag der Patentschrift: **18.05.94**

(51) Int. Cl.$^5$: **C09B 44/10**

(21) Anmeldenummer: **88810307.4**

(22) Anmeldetag: **11.05.88**

(54) **Kationische Verbindungen.**

(30) Priorität: **20.05.87 CH 1941/87**

(43) Veröffentlichungstag der Anmeldung:
**23.11.88 Patentblatt 88/47**

(45) Bekanntmachung des Hinweises auf die Patenterteilung:
**18.05.94 Patentblatt 94/20**

(84) Benannte Vertragsstaaten:
**BE CH DE ES FR GB IT LI**

(56) Entgegenhaltungen:
**EP-A- 0 029 136**
**EP-A- 0 038 299**
**EP-A- 0 074 926**
**EP-A- 0 113 922**
**EP-A- 0 145 656**

(73) Patentinhaber: **CIBA-GEIGY AG**
**Klybeckstrasse 141**
**CH-4002 Basel(CH)**

(72) Erfinder: **Stingelin, Willy**
**Stockackerstrasse 1A**
**CH 4153 Reinach(CH)**

EP 0 292 433 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue kationische Verbindungen, Verfahren zu deren Herstellung und deren Verwendung zum Färben und Bedrucken von Textilmaterialien, Leder und Papier.

Die neuen kationischen Verbindungen entsprechen der Formel

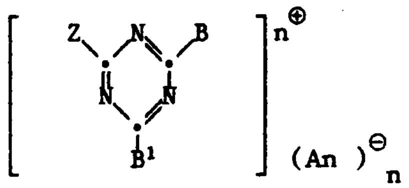

(1)

worin bedeuten:

| | |
|---|---|
| Z | einen Rest der Formel |

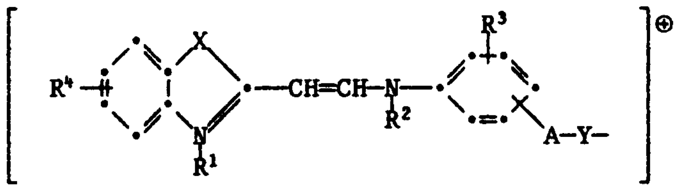

(2)

| | |
|---|---|
| B und $B^1$ | unabhängig voneinander einen Rest Z, einen von Z verschiedenen kationischen Rest oder einen Rest der Formel |

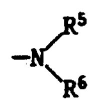
,

| | |
|---|---|
| $R^1$ | unabhängig voneinander gegebenenfalls substituiertes $C_1$-$C_6$-Alkyl, oder $C_3$-$C_4$-Alkenyl, |
| $R^2$ | unabhängig voneinander gegebenenfalls substituiertes $C_1$-$C_6$-Alkyl, |
| $R^3$ und $R^4$ | unabhängig voneinander Wasserstoff, gegebenenfalls substituiertes $C_1$-$C_4$-Alkyl, gegebenenfalls substituiertes $C_1$-$C_4$-Alkoxy, $NO_2$, gegebenenfalls substituiertes Acylamino, Halogen oder CN, |
| $R^5$ | Wasserstoff, einen gegebenenfalls substituierten $C_1$-$C_6$-Alkylrest, $C_3$-$C_6$-Alkenylrest oder Arylrest, |
| $R^6$ | Wasserstoff, einen gegebenenfalls substituierten $C_1$-$C_6$-Alkylrest $C_3$-$C_6$-Alkenylrest oder Arylrest oder $R^5$ und $R^6$ zusammen mit dem sie verbindenden Stickstoff einen heterocyclischen Rest, |
| X | ein Schwefelatom oder die Gruppe |

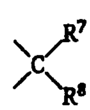

worin $R^7$ und $R^8$ unabhängig voneinander $C_1$-$C_6$-Alkyl oder $C_3$-$C_4$-Alkenyl bedeuten, wobei die Reste $R^7$ und $R^8$ auch miteinander zu einem carbocyclischen 5- oder 6-Ring verknüpft sein können;

| | |
|---|---|
| A | die direkte Bindung, -NH-alkylen ($C_1$-$C_4$), -O-alkylen ($C_1$-$C_4$), Alkylen ($C_1$-$C_4$), Phenylen, -O-phenylen oder -NH-phenylen; |
| Y | -NH-, -$NR^1$-, -O- oder -S-, |
| n | 1, 2 oder 3 und |
| $An^\ominus$ | ein Anion. |

Unter Alkyl sind erfindungsgemäss generell unverzweigte oder verweigte Alkylgruppen zu verstehen. Es handelt sich z.B. um Methyl, Ethyl, n- oder iso-Propyl, n-, sec- oder tert.-Butyl, geradkettiges oder verzweigtes Pentyl oder Hexyl; ferner auch um cyclische Alkylgruppen, wie z.B. Cyclopentyl, Cyclohexyl oder Methylcyclohexyl.

Diese Gruppen können substituiert sein z.B. durch eine $C_1$-$C_4$-Alkoxygruppe wie die Methoxy-, Ethoxy-, n- und iso-Propoxygruppe oder n- und iso-Butoxygruppe; durch CN, durch Halogen wie Fluor, Chlor oder Brom, durch Phenyl (seinerseits gegebenenfalls weitersubstituiert durch z.B. Halogen, Alkyl und/oder Alkoxy) durch $CONH_2$ oder durch eine am N-Atom mono- oder disubstituierte (z.B. durch $C_1$-$C_4$-Alkyl) Carbonsäureamidgruppe.

Bei den $C_1$-$C_4$-Alkoxygruppen handelt es sich um unverzweigte oder verzweigte Alkoxygruppen wie z.B. um Methoxy, Ethoxy, n- und iso-Propoxy oder n- und iso-Butoxy, wobei diese Gruppen weitersubstituiert sein können, beispielsweise durch Phenyl.

Bedeutet B oder/und $B^1$ einen von Z verschiedenen kationischen Rest, so kommen z.B. Reste der folgenden Strukturen in Frage;

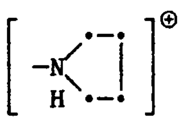 , 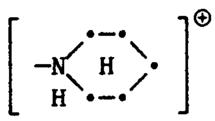 , 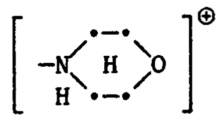 oder 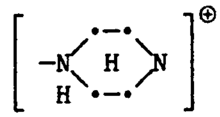

und insbesondere Reste der Formeln:

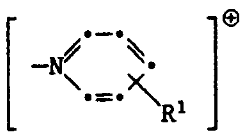 , 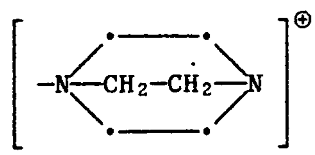 , $[-NH(CH_2)_p-N(R^1)_3]^{\oplus}$ ,

$[-NH(CH_2)_p-NH(R^1)_2]^{\oplus}$, $[-N(R^1)_3]^{\oplus}$ oder

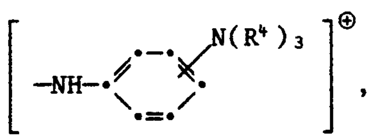 ,

worin die Substituenten $R^1$ und $R^4$ die angegebene Bedeutung haben und p die Zahl 2 oder 3 ist.

B oder $B^1$ in der Bedeutung einer $[-NH(CH_2)_p-N(R^1)_3]^{\oplus}$ oder $[-NH(CH_2)_p-NH(R^1)_2]^{\oplus}$ Gruppe stellt beispielsweise folgende Gruppen dar:

$-NH-CH_2-CH_2-\overset{\oplus}{N}(CH_3)_3$, $-NH-CH_2-CH_2-CH_2-\overset{\oplus}{N}(CH_3)_3$,

$-NH-CH_2-CH_2-\overset{\oplus}{N}(C_2H_5)_3$, $-NH-CH_2-CH_2-CH_2-\overset{\oplus}{N}(C_2H_5)_3$,

$-NH-CH_2-CH_2-\overset{\oplus}{N}(iso\text{-}C_3H_7)_3$, $-NH-CH_2-CH_2-CH_2-\overset{\oplus}{N}(iso\text{-}C_3H_7)_3$,

$-NH-CH_2-CH_2-\overset{\oplus}{N}(n\text{-}C_3H_7)_3$, $-NH-CH_2-CH_2-CH_2-\overset{\oplus}{N}(n\text{-}C_3H_7)_3$,

$-NH-CH_2-CH_2-\overset{\oplus}{N}H(CH_3)_2$, $-NH-CH_2-CH_2-CH_2-\overset{\oplus}{N}H(CH_3)_2$,

$-NH-CH_2-CH_2-\overset{\oplus}{N}H(C_2H_5)_2$,

$-NH-CH_2-CH_2-CH_2-\overset{\oplus}{N}H(C_2H_5)_2$,

$-NH-CH_2-CH_2-\overset{\oplus}{N}H(n-C_3H_7)_2$,

$-NH-CH_2-CH_2-CH_2-\overset{\oplus}{N}H(n-C_3H_7)_2$,

$-NH-CH_2-CH_2-\overset{\oplus}{N}H(iso-C_3H_7)_2$,

$-NH-CH_2-CH_2-CH_2-\overset{\oplus}{N}H(iso-C_3H_7)_2$,

$-NH-CH_2-CH_2-\overset{\oplus}{N}H(n-C_4H_9)_2$,

$-NH-CH_2-CH_2-CH_2-\overset{\oplus}{N}H(n-C_4H_9)_2$,

$-NH-CH_2-CH_2-\overset{\oplus}{N}H(tert.-C_4H_9)_2$,

$-NH-CH_2-CH_2-CH_2-\overset{\oplus}{N}H(tert.-C_4H_9)_2$,

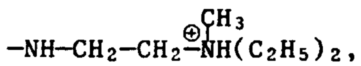

$-NH-CH_2-CH_2-CH_2-\overset{\oplus}{N}(CH_2CN)_3$,

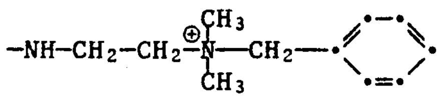

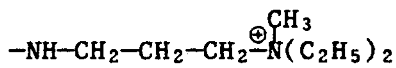

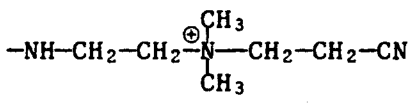

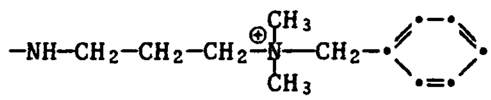

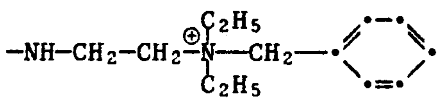

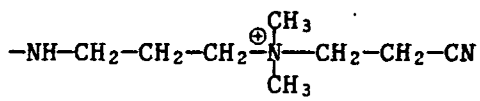

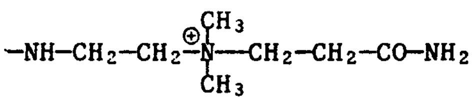

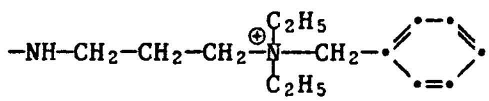

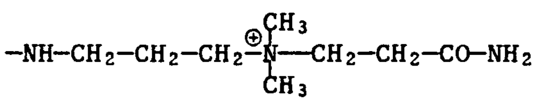

In der Bedeutung einer $[-N(R^1)_3]^{\oplus}$ Gruppe stellt B beispielsweise eine der folgenden Gruppen dar:

$-N^{\oplus}(CH_3)_3$,

$-N^{\oplus}(C_2H_5)_3$,

$-N^{\oplus}(iso\text{-}C_3H_7)_3$,

$-N^{\oplus}(n\text{-}C_3H_7)_3$,

$-\overset{\oplus}{N}H(CH_3)_2$,

$-\overset{\oplus}{N}H(C_2H_5)_2$,

$-\overset{\oplus}{N}H(n\text{-}C_3H_7)_2$,

$-\overset{\oplus}{N}H(iso\text{-}C_3H_7)_2$,

$-\overset{\oplus}{N}H(n\text{-}C_4H_9)_2$,

$-\overset{\oplus}{N}H(tert.\text{-}C_4H_9)_2$,

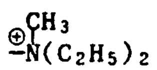

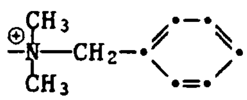

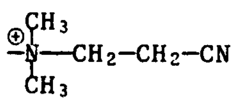

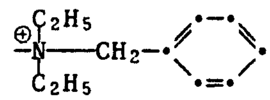
,

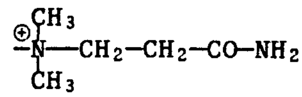
,

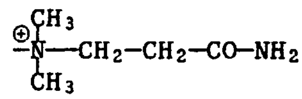

$-\overset{\oplus}{N}(C_2H_4OCH_3)_3$,

$-\overset{\oplus}{N}(C_2H_4CN)_3$,

$-\overset{\oplus}{N}(CH_2COOH)_3$,

$-\overset{\oplus}{N}(C_4H_8CONH_2)_3$,

Bedeutet B oder/und $B^1$ einen Rest der Formel

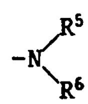

so stellen $R^5$ und $R^6$ in der Bedeutung Aryl beispielsweise Phenyl oder Naphthyl dar. Bilden $R^5$ und $R^6$ zusammen mit dem Stickstoffatom, an das sie gebunden sind, einen Heterocyclus, so handelt es sich z.B. um einen 5- oder 6-gliedrigen Heterocyclus wie beispielsweise Thiazol, Imidazol, Pyrazol, Triazol, Pyrrolidin, Piperazin, Piperidin und Morpholin.

Sowohl der Arylrest als auch der Heterocyclus können noch substituiert sein, beispielsweise durch $C_1$-$C_4$-Alkoxy, $C_1$-$C_4$-Alkyl, OH, Halogen (Fluor, Chlor, Brom), $NO_2$, CN, -NH-$C_1$-$C_4$-Alkyl, $N(Alkyl)_2$, $[^{\oplus}N(Alkyl)_3]An^{\ominus}$ und $NH_2$.

Bedeutet $R^5$ und/oder $R^6$ $C_1$-$C_6$-Alkyl, so kann dieser Alkylrest ein- oder mehrmals unterbrochen sein durch -O-, -S- und/oder -NH-; dieser Alkylrest kann unverzweigt oder verzweigt sein und er kann auch substituiert sein.

Bedeutet $R^5$ und/oder $R^6$ $C_3$-$C_6$-Alkenyl, so handelt es sich beispielsweise um die Reste $-CH_2-CH=CH_2$ und $-CH_2-CH=CH-CH_3$.

Sowohl der $C_1$-$C_6$-Alkylrest als auch der $C_1$-$C_6$-Alkenylrest können noch substituiert sein; als Substituenten kommen beispielsweise in Frage: OH, Halogen (Fluor, Chlor, Brom), $NO_2$, CN, NH-Alkyl($C_1$-$C_4$), N-(Alkyl $C_1$-$C_4$)$_2$ und $[-N(R^1)_3]^{\oplus}$.

Vorzugsweise bedeutet $R^5$ Wasserstoff, Phenyl oder durch $C_1$-$C_4$-Alkyl, $C_1$-$C_4$-Alkoxy, Chlor, Nitro, -NH-$C_1$-$C_4$-Alkyl oder CN substituiertes Phenyl.

$R^6$ bedeutet vorzugsweise Wasserstoff.

Von den Farbstoffen der Formel (1) sind diejenigen bevorzugt, bei denen B einen Rest Z darstellt und $B^1$ einen kationischen Rest oder einen Rest der Formel

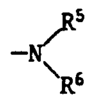 .

Ganz besonders bevorzugt sind jedoch solche Farbstoffe der Formel (1), bei denen B und $B^1$ je einen Rest Z darstellen, und unter diesen vor allem diejenigen, bei denen die drei Reste Z identisch sind.

Handelt es sich bei $R^3$ oder $R^4$ um eine Acylaminogruppe, so kommt z.B. die Benzoylamino- oder Acetylaminogruppe in Frage. Die Acylaminogruppe kann substituiert sein durch z.B. Halogen wie Fluor, Chlor oder Brom oder durch eine $NH_2$-Gruppe oder durch eine am N-Atome durch beispielsweise $C_1$-$C_4$-Alkyl mono- oder disubstituierte Aminogruppe.

Bedeutet $R^3$ oder $R^4$ Halogen so handelt es sich vor allem um Fluor, Chlor oder Brom.

Es ist auch möglich, dass der Substituent $R^3$ oder $R^4$ mehrmals in ein und demselben Benzolring vorkommt.

In den bevorzugten kationischen Verbindungen der Formel (1) bedeuten $R^3$ und $R^4$ unabhängig voneinander je Wasserstoff oder eine unsubstituierte, unverzweigte $C_1$-$C_4$-Alkylgruppe, insbesondere die Methylgruppe oder eine unsubstituierte, unverzweigte $C_1$-$C_4$-Alkoxygruppe, vor allem die Methoxygruppe, oder Halogen, insbesondere Chlor.

Falls $R^1$, $R^7$ oder $R^8$ eine Alkenylgruppe bedeutet, so handelt es sich vor allem um die Allylgruppe.

In den bevorzugten kationischen Verbindungen der Formel (1) bedeutet $R^1$ eine unsubstituierte, unverzweigte $C_1$-$C_4$ Alkylgruppe, vor allem die $CH_3$-Gruppe.

Bedeutet X die

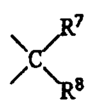

-Gruppierung, wobei die Reste $R^7$ und $R^8$ miteinander zu einem carbocyclischen 5- oder 6-Ring verknüpft sind, so handelt es sich vor allem um den unsubstituierten Cyclopentan- oder Cyclohexanring.

In den bevorzugten kationischen Verbindungen der Formel (1) bedeutet X die

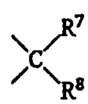

-Gruppierung, worin $R^7$ und $R^8$ je einen unverzweigten, unsubstituierten $C_1$-$C_4$ Alkylrest darstellt; insbesondere bedeutet X die

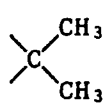

-Gruppierung.

$R^2$ bedeutet vorzugsweise eine unsubstituierte $C_1$-$C_4$-Alkylgruppe oder Benzyl und insbesondere Methyl oder Ethyl.

Bedeutet A eine -Alkylen ($C_1$-$C_4$)-, -NH-alkylen ($C_1$-$C_4$)- oder -O-alkylen ($C_1$-$C_4$)-Brücke, so kommen als "Alkylen" Brücken beispielsweise Methylen, Ethylen, n- und iso-Propylen oder n- und iso-Butylen in Frage.

In den bevorzugten kationischen Verbindungen der Formel (1) ist A in m- oder vor allem p-Stellung zur -CH=CH-$NR^2$-Brücke gebunden und bedeutet entweder die direkte Bindung oder -O-Phenylen- oder -NH-Phenylen. Vorzugsweise stellt A eine direkte Bindung dar, d.h., dass der Rest Y direkt mit dem Phenylenrest und dem Triazinrest verbunden ist.

Y in der Bedeutung einer -NR[1]-Gruppe stellt eine -N-alkyl ($C_1$-$C_6$)-Gruppe dar, wie die -N-$CH_3$-, -N-$C_2H_5$-, -N-$C_3H_7$-Gruppe, wobei der Alkylrest noch definitionsgemäss substituiert sein kann, vor allem durch CN oder Halogen.

In den bevorzugten kationischen Verbindungen der Formel (1) bedeutet Y die -NH- oder -NR[1]-Gruppe, insbesondere die -N-$CH_3$-Gruppe.

Als Anionen An kommen sowohl anorganische als auch organische Anionen in Frage, beispielsweise: Halogenide, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat, Phosphorwolframmolybdat-, Benzolsulfonat-, Naphthalinsulfonat, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen oder komplexe Anionen, wie das von Chlorzinkdoppelsalzen.

Bevorzugte Anionen An sind das Formiat-, Acetat-, Lactat-, Chlorid-, Sulfat- und Phosphation.

Zur Klarstellung sei hervorgehoben, dass für den Fall, dass B oder B[1] die Bedeutung von Z hat, die beiden Reste Z nicht identisch sein müssen. Für den Fall, dass B und B[1] einen kationischen Rest oder einen Rest der Formel

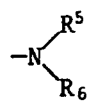

bedeuten, so können auch hier diese beiden Reste identisch oder voneinander verschieden sein. Zudem können die Substituenten $R^5$ und $R^6$ wie dargelegt durch kationische Gruppen substituiert sein, so dass Verbindungen der Formel (1) resultieren, die mehrere kationische Gruppen aufweisen.

Ein besonders bevorzugte Ausführungsform der Erfindung sind die Farbstoffe der Formel

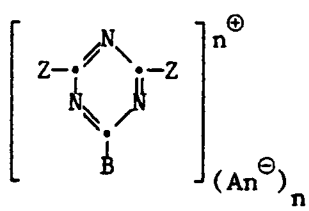

(3)

worin bedeuten:

Z einen Rest der Formel

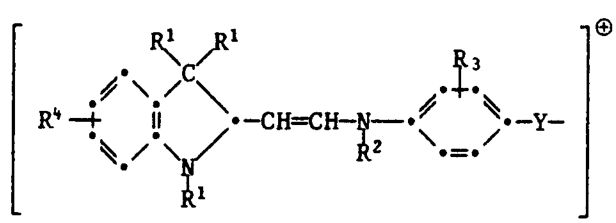

(4)

B einen Rest Z oder einen Rest der Formel

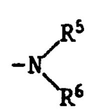 ,

| | |
|---|---|
| $R^1$ | unabhängig voneinander unsubstituiertes $C_1$-$C_4$-Alkyl, |
| $R^2$ | unsubstituiertes $C_1$-$C_4$-Alkyl oder Benzyl, |
| $R^3$ und $R^4$ | unabhängig voneinander je Wasserstoff, $C_1$-$C_4$-Alkyl, $C_1$-$C_4$-Alkoxy oder Chlor, |
| $R^5$ | Wasserstoff, Phenyl oder durch $C_1$-$C_4$-Alkyl, $C_1$-$C_4$-Alkoxy, Chlor, Nitro, -NH-$C_1$-$C_4$-Alkyl, oder CN substituiertes Phenyl, |
| $R^6$ | Wasserstoff oder unsubstituiertes $C_1$-$C_4$-Alkyl, |

Y -NH- oder $-NR^1$,
n 2 oder 3 und
$An^{\ominus}$ ein Anion.

Die neuen kationischen Verbindungen der Formel (1) stellen grünstichig bis rotstichig gelbe Verbindungen dar. Sie können auf an sich bekannte Art und Weise hergestellt werden.

Verbindungen der Formel (1), worin B und $B^1$ je einen Rest Z bedeuten, werden beispielsweise erhalten, indem man 1 Mol einer Verbindung der Formel

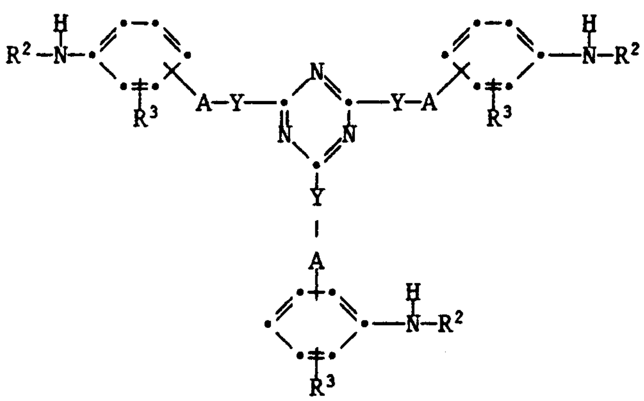

(5)

mit 3 Mol einer Aldehydverbindung der Formel

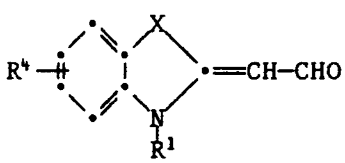

(6)

in Gegenwart einer Säure HAn kondensiert, wobei $R^1$, $R^2$, $R^3$, $R^4$, A, Y, X und An die unter Formel (1) angegebene Bedeutung aufweisen.

Verbindungen der Formel (1), bei denen B und $B^1$ nicht mit Z identisch sind, erhält man z.B., indem man 1 Mol einer Verbindung der Formel (5) mit 1 Mol eines Aldehyds der Formel (6) kondensiert. Man erhält so Verbindungen der Formel (1), bei denen B und $B^1$ je einen Rest der Formel

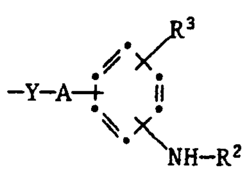

(7)

bedeuten.

In analoger Weise erhält man aus 1 Mol einer Verbindung der Formel (5) und 2 Mol eines Aldehyds der Formel (6) solche Verbindungen der Formel (1), bei denen B einen Rest der Formel (7) und $B^1$ Z bedeutet. Bei den beiden letztgenannten Reaktionen erhält man jedoch meist keine einheitlichen Verbindungen sondern Gemische von Verbindungen, enthaltend 1, 2 oder 3 Reste Z.

Vorzugsweise setzt man 1 Mol Verbindung der Formel (5) mit 2,5 bis 2,99, insbesondere 2,8 bis 2,99 Mol eines Aldehyds der Formel (6) um. Die Verbindung der Formel (5) wird also in geringem Ueberschuss eingesetzt.

Verbindungen der Formel (1), bei denen B und $B^1$ nicht mit Z identisch sind, kann man beispielsweise auch erhalten, indem man 1 Mol eine, Verbindung der Formel

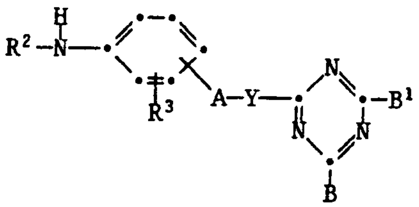

(8)

mit 1 Mol einer Aldehydverbindung der Formel (6) in Gegenwart einer Säure HAn kondensiert, wobei $R^2$, $R^3$, A, Y, B, $B^1$ und An die unter der Formel (1) angegebene Bedeutung aufweisen.

In analoger Weise erhält man Verbindungen der Formel (1), bei denen B Z bedeutet und $B^1$ nicht mit Z identisch ist, beispielsweise indem man 1 Mol einer Verbindung der Formel

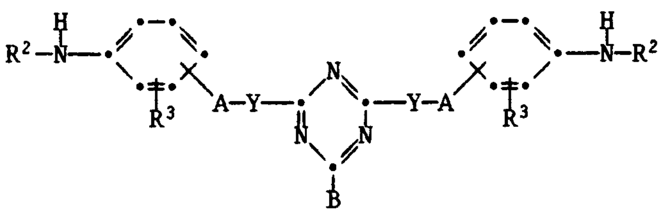

(9)

mit 2 Mol einer Aldehydverbindung der Formel (6) in Gegenwart einer Säure HAn kondensiert.

Die Amine der Formeln (5), (8) und (9) sind bekannt oder können nach an sich bekannten Methoden dargestellt werden.

Beispielsweise erhält man die Verbindungen der Formel (5) indem man 1 Mol s-Trichlortriazin mit 3 Mol einer Verbindung der Formel

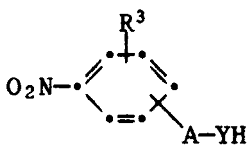

(10)

umsetzt, anschliessend im Kondensationsprodukt die $NO_2$-Gruppe zur $NH_2$-Gruppe reduziert und mit einem die Gruppe $R^2$ einführenden Alkylierungsmittel umsetzt.

Die Verbindungen der Formel (8) erhält man z.B., indem man s-Trichlortriazin stufenweise mit einer Verbindung HB und $HB^1$ zu einer Verbindung der Formel

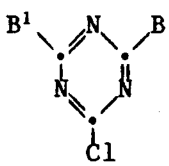

(11)

umsetzt, diese dann mit einer Verbindung der Formel (10) zu einer Verbindung der Formel

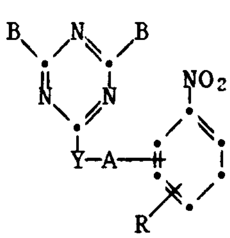

(12)

umsetzt, anschliessend die $NO_2$-Gruppe zur $NH_2$-Gruppe reduziert und mit 1 Mol eines Aldehyds der Formel (6) in Gegenwart einer Säure HAn kondensiert.

Die Verbindungen der Formel (9) erhält man in analoger Weise, beispielsweise indem man s-Trichlortriazin zunächst mit 2 Mol einer Verbindung der Formel (10) und dann mit 1 Mol einer Verbindung B-H umsetzt, anschliessend im Kondensationsprodukt die $NO_2$-Gruppe reduziert und mit einem die Gruppe $R^2$ einführenden Alkylierungsmittel umsetzt.

Die Verbindungen der Formel (10) sowie die Aldehyde der Formel (6) sind ebenfalls bekannt oder können auf an sich bekannte Art und Weise hergestellt werden.

Als Aldehyde der Formel (6) kommen z.B. in Frage:

1,3,3-Trimethyl-2-methylen-indolin-ω-aldehyd,
1,3,3-Trimethyl-5-chlor-2-methylen-indolin-ω-aldehyd,
1,3,3-Trimethyl-5-methyl-2-methylen-indolin-ω-aldehyd und
1,3,3-Trimethyl-5-cyan-2-methylen-indolin-ω-aldehyd.

Die Kondensationsreaktion der Verbindungen (5), (8), und (9) mit dem Aldehyd der Formel (6) erfolgen nach bekannter Art und Weise, z.B. in wässrigem Medium oder organischem Lösungsmittel bei einer Temperatur von etwa 0° bis 100°C in Gegenwart einer Säure HAn. Bei dieser Säure HAn handelt es sich um eine organische Säure, wie Essigsäure oder Arylsulfonsäure, vor allem Benzolsulfonsäure oder um eine anorganische Säure, wie Salzsäure, Schwefelsäure oder Phosphorsäure.

Nach der Kondensationsreaktion werden die neuen kationischen Verbindungen gegebenenfalls vom Reaktionsmedium getrennt und getrocknet.

Eine weitere Herstellungsmethode für die Verbindungen der Formel (1) besteht darin, dass man von Verbindungen ausgeht, welche anstelle der Gruppe $R^2$ Wasserstoff aufweisen und ansonsten der Formel (1) entsprechen, und in diese Verbindungen den Rest $R^2$ einführt. Die entsprechenden Ausgangsverbindungen sind bekannt, z.B. aus den Europäischen Patentanmeldungen 38 299, 94 642 und 145 656.

Die erfindungsgemässen Verbindungen weisen gegenüber den dort beschriebenen Verbindungen, welche Wasserstoff anstelle der Gruppe $R^2$ aufweisen, den Vorteil auf, dass sie auch bei höheren pH-Werten stabil sind. Dies gestattet ihre Verwendung in Färbeverfahren z.B. bei pH-Werten bis ca. 9.

Falls gewünscht oder erforderlich, kann man in den kationischen Verbindungen der Formel (1) das Anion An nach bekannter Art und Weise gegen ein anderes Anion austauschen.

Die neuen Verbindungen lassen sich aber auch direkt, nach Einengen des Reaktionsmediums, in eine flüssige Handelsform überführen.

Verwendung finden die neuen kationischen Verbindungen der Formel (1) als Farbstoffe zum Färben und, unter Zusatz von Binde- und gegebenenfalls Lösungsmitteln, zum Bedrucken von mit kationischen Farbstoffen anfärbbaren Materialien, insbesondere Textilmaterialien, die z.B. aus Homo- oder Mischpolymerisaten des Acrylnitrils bestehen oder aus synthetischen Polyamiden oder Polyestern, welche durch saure Gruppen modifiziert sind. Man färbt vorzugsweise in wässrigem, neutralem oder saurem Medium nach dem Ausziehverfahren, gegebenenfalls unter Druck, oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Durch die Applikation der Farbstoffe lassen sich egale grünstichig bis roststichig gelbe Färbungen bzw. Drucke herstellen, die sich durch sehr gute Allgemeinechtheiten auszeichnen.

Ausserdem können die neuen kationischen Farbstoffe auch zum Färben und Bedrucken von natürlichen und regenerierten Cellulosematerialien, vor allem von Baumwolle und Viscose, verwendet werden, wobei man ebenfalls grünstichig bis rotstichig gelbe farbstarke Ausfärbungen erhält. Die neuen Farbstoffe haben auf diesen Textilmaterialien ein gutes Ziehvermögen, einen guten Ausziehgrad und die erhaltenen Färbungen weisen sehr gute Echtheiten, vor allem Nassechtheiten auf.

Eine weitere Verwendung der neuen kationischen Farbstoffe der Formel (1) leigt in der Anwendung zum Färben von Papier aller Arten, vor allem von gebleichtem, ungeleimten ligninfreiem Papier. Ganz besonders geeignet sind diese Verbindungen zum Färben von ungeleimtem Papier (Tissues) wegen ihrer sehr hohen Affinität zu diesem Substrat.

Die neuen Verbindungen ziehen sehr gut auf diese Substrate auf, so dass die Abwasser praktisch farblos bleiben.

Die erhaltenen Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil und ermöglicht einen viel breiteren Einsatz dieses bekannten wirtschaftlichen Verfahrens. Hervorzuheben ist insbesondere ihre pH-Stabilität bei pH-Werten über 7, z.B. bie pH-Werten bis 9.

Die neuen Farbstoffe können nach den verschiedensten Verfahren auf das Papiermaterial appliziert werden z.B. in der Massefärbung, in der Leimpresse und aus wässrigen Tinten nach der INK-JET Methode.

Ferner können die neuen Farbstoffe noch zum Färben von Leder (durch z.B. Sprühen, Bürsten und Tauchen) verwendet werden und zur Bereitung von Tinten.

Die folgenden Beispiele veranschaulichen die Erfindung, ohne sie darauf zu limitieren. Die Temperaturen sind in Grad Celsius angegeben. Teile bedeuten Gewichtsteile und %-Angaben sind Gewichtsprozente.

Die Abkürzung RKN stellt eine Qualitätsbezeichnung dar und gibt den Reinheitsgrad der Cellulose an; Abkürzung SR (Schopper-Riegler) gibt den Mahlgrad an.

Beispiel 1: 9,1 Teile 2,4,6-s-Tri-(4′-N-methylaminophenylamino)-triazin und 12,0 Teile 1,3,3-Trimethyl-2-methylenindolin-ω-aldehyd werden in 60 Teilen Methanol und 3,9 Teilen 85%iger Ameisensäure verrührt bei 20-25°. Nach 10 Stunden ist die Kondensation beendet, das Methanol wird durch Abdestillieren im Vakuum entfernt, und man erhält 22,0 Teile braunes Farbstoffpulver folgender Struktur:

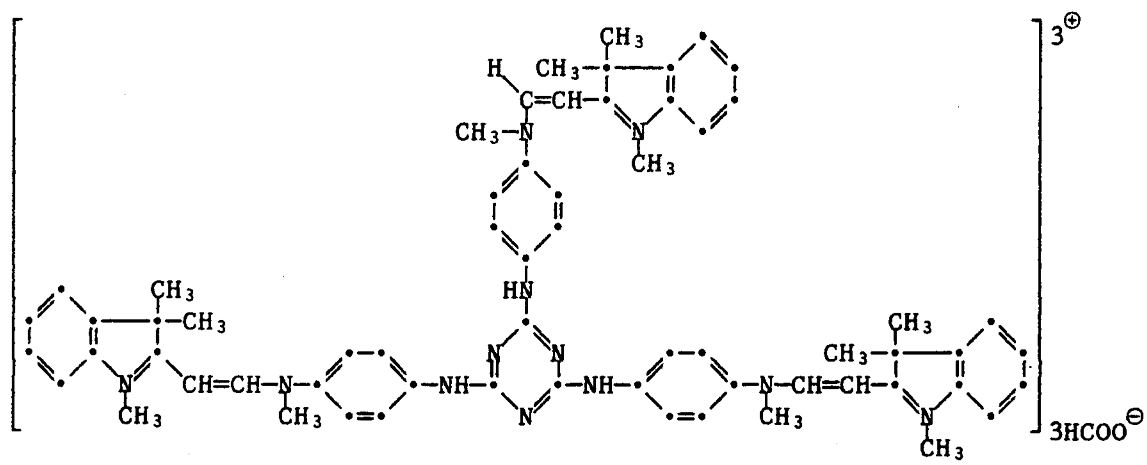

Der Farbstoff färbt Papier in brillantem grünstichigem Gelb.

Beispiel 2: Das Farbstoffkation gemäss der Struktur von Beispiel 1 kann auch durch Quaternisierung mit Dimethylsulfat in Wasser der entsprechenden Farbbase folgende Structur erhalten werden:

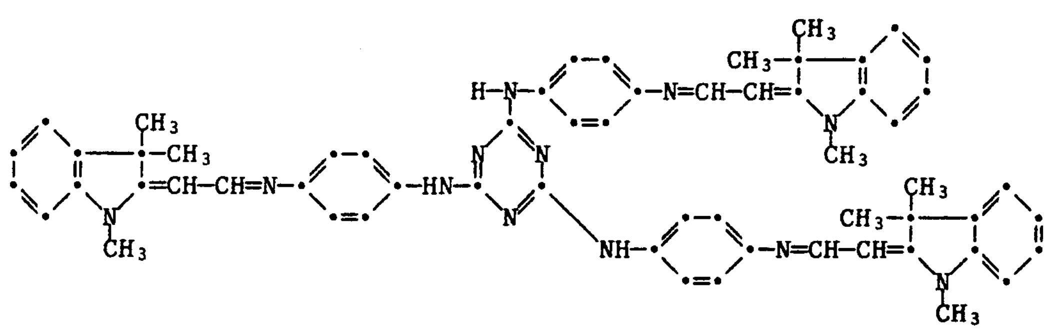

Die Herstellung der Farbbase ist im Beispiel 1 der EP-A-38 299 beschrieben.

Beispiele 3-13: Gemäss der im Beispiel 1 angegebenen Arbeitsweise und unter Verwendung der in der folgenden Tabelle aufgeführten Komponenten erhält man kationische Farbstoffe, welche Papier in grünstichig gelben Nuancen anfärben.

| Bsp. | 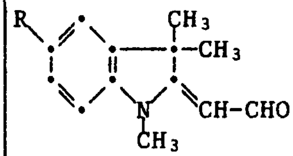 | 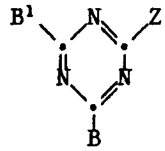 | | |
|---|---|---|---|---|
| | R | Z | $B^1$ | B |
| 3 | H | 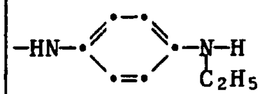 | Z | Z |
| 4 | H | 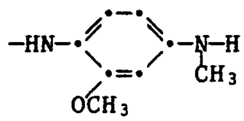 | Z | Z |
| 5 | H | 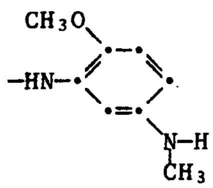 | Z | Z |
| 6 | H | 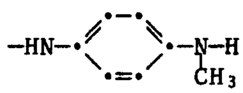 | Z | 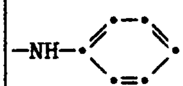 |
| 7 | H | 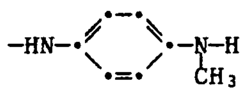 | Z | 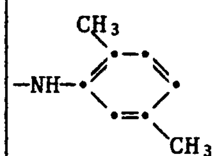 |
| 8 | Cl | 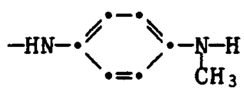 | Z | Z |
| 9 | H | 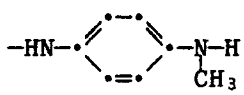 | Z | $-NH_2$ |
| 10 | H | 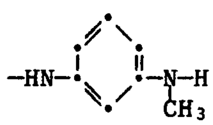 | Z | Z |
| 11 | H | 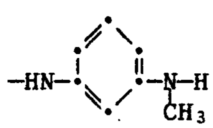 | Z | 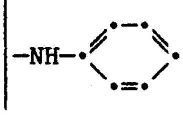 |

| Bsp. | 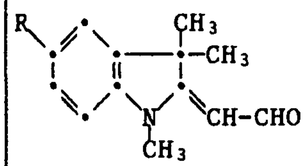 | 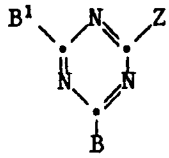 | | |
|---|---|---|---|---|
| | R | Z | $B^1$ | B |
| 12 | H | 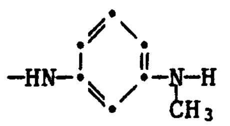 | 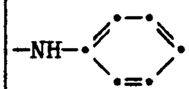 | 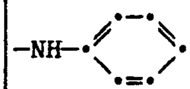 |
| 13 | H | 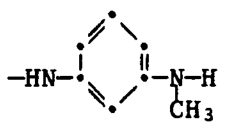 | 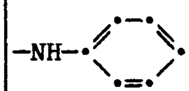 | $-NH_2$ |
| 14 | H | 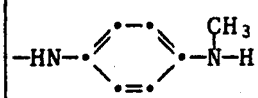 | Z | 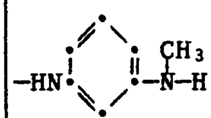 |
| 15 | H | 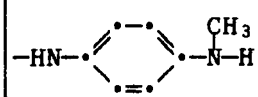 | 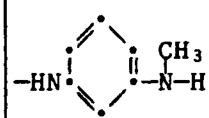 | $B^1$ |
| 16 | Cl | 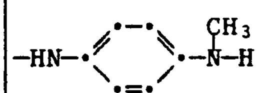 | 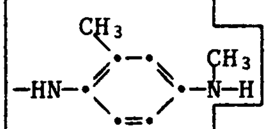 | $B^1$ |
| 17 | H | 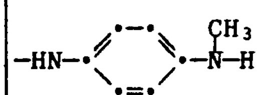 | 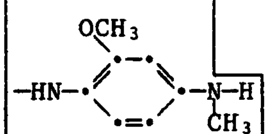 | $B^1$ |
| 18 | Cl | 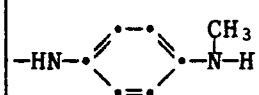 | 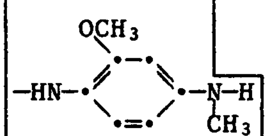 | $B^1$ |
| 19 | H | 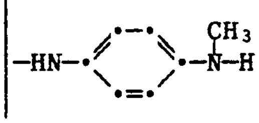 | Z | $-N(CH_3)_2$ |

| Bsp. | 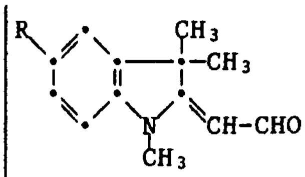 | 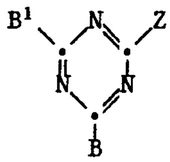 | | |
|---|---|---|---|---|
| | R | Z | $B^1$ | B |
| 20 | H | 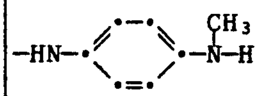 | Z | $-N(C_2H_5)_2$ |
| 21 | H | 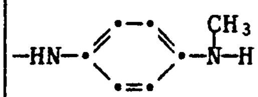 | Z | $-N(C_3H_7)_2$ |
| 22 | H | 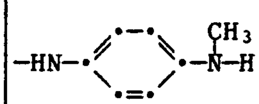 | Z | $-NHC_2H_5$ |
| 23 | H | 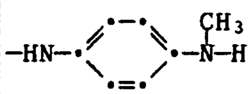 | Z | $-NHC_3H_7$ |
| 24 | H | 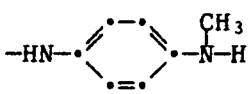 | Z | $-NH(CH_2)_3N(CH_3)_2$ |
| 25 | H | 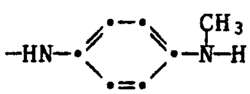 | Z | $-NH(CH_2)_3\overset{\oplus}{N}(CH_3)_3$ |
| 26 | H | 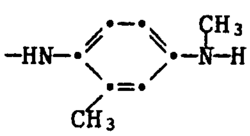 | Z | $-NH(CH_2)_3\overset{\oplus}{N}(CH_3)_3$ |

Beispiel 27: Man vermischt 50 Teile chemisch gebleichten Buche-Sulfit-Zellstoff mit 50 Teilen gebleichter Cellulose RKN 15 (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer sehr intensiven grünstichig gelben Nuance gefärbt. Das Abwasser ist völlig farblos. Der Ausziehgrad erreicht praktisch 100 %. Die Licht- und Nassechtheiten sind ausgezeichnet.

Beispiel 28: Es wird eine Papierbahn aus gebleichtem Buche-Sulfit-Zellstoff (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine farbstarke Gelbnuance von mittlerer Intensität. Das Abwasser ist völlig farblos.

Beispiel 29: Färbt man bei gleicher Arbeitsweise wie im Beispiel 28, jedoch bei pH 8,5, so erhält man eine gleich gefärbte Papierbahn, wobei das Abwasser völlig farblos ist.

Beispiel 30: 10 Teile Baumwollgewebe (gebleichte mercerisierte Baumwolle) werden in einem Labor-Baumfärbeapparat in 200 Teilen einer Flotte (Wasserhärte 10° dH, pH 4, 3 Umwälzungen der Färbeflotte pro Minute) die 0,05 Teile des Farbstoffes gemäss Beispiel 1 enthält, gefärbt. Die Temperatur wird in 60 Minuten von 20° auf 100° aufgeheizt, dann während 15 Minuten konstant gehalten.

Die Färbeflotte ist völlig ausgezogen. Es entsteht auf dem Baumwollgewebe eine farbstarke gelbe Färbung, welche sich durch eine gute Lichtechtheit und eine sehr gute Nassechtheit auszeichnet.

Färbt man bei gleicher Arbeitsweise ein Texilgewebe aus Regenerat-Cellulose (Viskose), so erhält man auch auf diesem Material mit dem Farbstoff des Beispiels 1 eine farbstarke gelbe Färbung, die eine gute Lichtechtheit und sehr gute Nassechtheit besitzt.

## Patentansprüche

**1.** Kationische Verbindungen der Formel

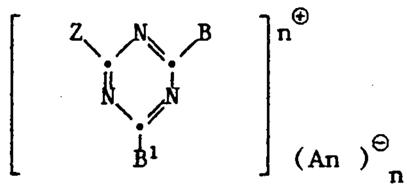

(1)

worin bedeuten:

Z einen Rest der Formel

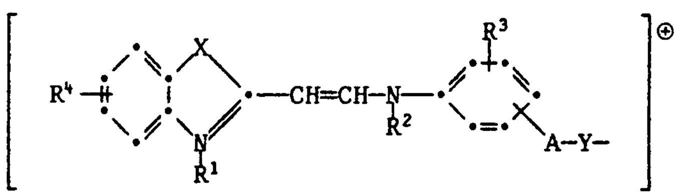

(2)

B und $B^1$ unabhängig voneinander einen Rest Z, einen von Z verschiedenen kationischen Rest oder einen Rest der Formel

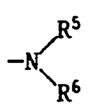

,

$R^1$ unabhängig voneinander gegebenenfalls substituiertes $C_1$-$C_6$-Alkyl oder $C_3$-$C_4$-Alkenyl,

$R^2$ unabhängig voneinander gegebenenfalls substituiertes $C_1$-$C_6$-Alkyl,

$R^3$ und $R^4$ unabhängig voneinander Wasserstoff, gegebenenfalls substituiertes $C_1$-$C_4$-Alkyl, gegebenenfalls substituiertes $C_1$-$C_4$-Alkoxy, $NO_2$, gegebenenfalls substituiertes Acylamino, Halogen oder CN,

$R^5$ Wasserstoff, einen gegebenenfalls substituierten $C_1$-$C_6$-Alkylrest, $C_3$-$C_6$-Alkenylrest oder Arylrest,

$R^6$ Wasserstoff, einen gegebenenfalls substituierten $C_1$-$C_6$-Alkylrest, $C_3$-$C_6$-Alkenylrest oder Arylrest oder $R^5$ und $R^6$ zusammen mit dem sie verbindenden Stickstoff einen heterocyclischen Rest,

X ein Schwefelatom oder die Gruppe

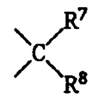

worin $R^7$ und $R^8$ unabhängig voneinander je $C_1$-$C_6$-Alkyl oder $C_3$-$C_4$-Alkenyl bedeuten, wobei die Reste $R^7$ und $R^8$ auch miteinander zu einem carbocyclischen 5- oder 6-Ring verknüpft sein können;

A die direkte Bindung, -NH-alkylen ($C_1$-$C_4$), -O-alkylen ($C_1$-$C_4$), Alkylen ($C_1$-$C_4$), Phenylen, -O-phenylen oder -NH-phenylen;

Y -NH-, -$NR^1$ -, -O- oder -S-,

n 1, 2 oder 3 und

$An^{\ominus}$ ein Anion.

**2.** Kationische Verbindungen gemäss Anspruch 1, dadurch gekennzeichnet, dass der kationische Rest B und/oder $B^1$ eine der folgenden Strukturen aufweist:

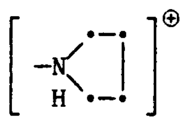 , 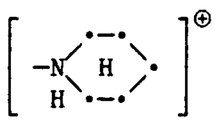 , 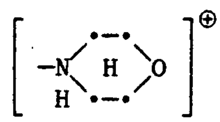 oder 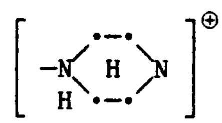

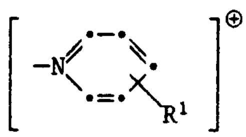 , 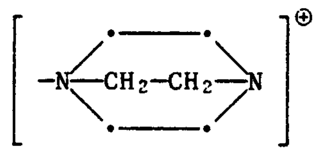 , $[-NH(CH_2)_p-N(R^1)_3]^{\oplus}$ ,

$[-NH(CH_2)_p-NH(R^1)_2]^{\oplus}$, $[-N(R^1)_3]^{\oplus}$ oder

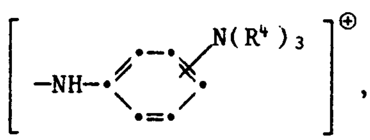 ,

worin die Substituenten $R^1$ und $R^4$ die angegebene Bedeutung haben und p die Zahl 2 oder 3 ist.

**3.** Kationische Verbindungen gemäss Anspruch 1, dadurch gekennzeichnet, dass B und/oder $B^1$ einen Rest der Formel

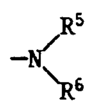

bedeuten, worin $R^6$ Wasserstoff und $R^5$ Wasserstoff, Phenyl oder durch $C_1$-$C_4$-Alkyl, $C_1$-$C_4$-Alkoxy, Chlor, Nitro, -NH-$C_1$-$C_4$-Alkyl oder CN substituiertes Phenyl bedeutet.

**4.** Kationische Verbindungen gemäss Anspruch 1, dadurch gekennzeichnet, dass B und/oder $B^1$ einen Rest Z darstellen.

**5.** Kationische Verbindungen gemäss einem der Ansprüche 1-4, dadurch gekennzeichnet, dass $R^3$ und $R^4$ unabhängig voneinander je Wasserstoff, eine unsubstituierte $C_1$-$C_4$-Alkyl- oder -Alkoxygruppe oder Halogen bedeuten.

**6.** Kationische Verbindungen gemäss Anspruch 5, dadurch gekennzeichnet, dass $R^3$ und $R^4$ unabhängig voneinander je Methyl, Methoxy oder Chlor bedeuten.

**7.** Kationische Verbindungen gemäss einem der Ansprüche 1-6, dadurch gekennzeichnet, dass $R^1$ eine unsubstituierte $C_1$-$C_4$-Alkylgruppe, vor allem Methyl, bedeutet.

**8.** Kationische Verbindungen gemäss einem der Ansprüche 1-7, dadurch gekennzeichnet, das X die

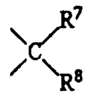

Gruppe bedeutet, worin $R^7$ und $R^8$ unabhängig voneinander je einen unsubstituierten $C_1$-$C_4$-Alkylrest darstellt.

**9.** Kationische Verbindungen gemäss einem der Ansprüche 1-8, dadurch gekennzeichnet, dass $R^7$ und $R^8$ Methyl sind.

**10.** Kationische Verbindungen gemäss einem der Ansprüche 1-9, dadurch gekennzeichnet, dass $R^2$ eine unsubstituierte $C_1$-$C_4$-Alkylgruppe oder Benzyl darstellt.

**11.** Kationische Verbindungen gemäss einem der Ansprüche 1-10, dadurch gekennzeichnet, dass A die direkte Bindung, -O-Phenylen-oder -NH-Phenylen- darstellt.

**12.** Kationische Verbindungen gemäss Anspruch 11, dadurch gekennzeichnet, dass A die direkte Bindung darstellt.

**13.** Kationische Verbindungen gemäss einem der Ansprüche 1-12, dadurch gekennzeichnet, dass Y die -NH- oder -$NR^1$-Gruppe darstellt.

**14.** Kationische Verbindungen gemäss einem der Ansprüche 1-13, dadurch gekennzeichnet, dass An das Formiat-, Acetat-, Lactat-, Chlorid-, Sulfat- oder Phosphation darstellt.

**15.** Kationische Verbindungen der Formel

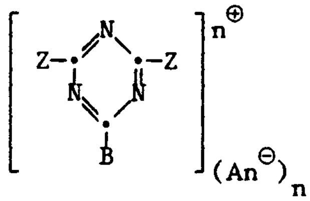

(3)

worin bedeuten:

Z einen Rest der Formel

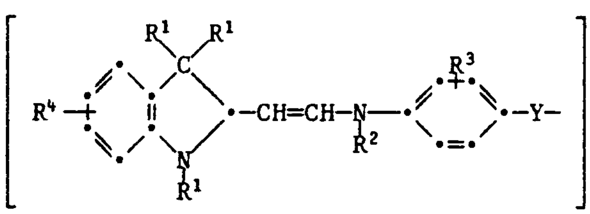

(4)

B einen Rest Z oder einen Rest der Formel

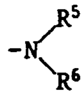 ,

| | |
|---|---|
| $R^1$ | unabhängig voneinander unsubstituiertes $C_1$-$C_4$-Alkyl, |
| $R^2$ | unsubstituiertes $C_1$-$C_4$-Alkyl oder Benzyl, |
| $R^3$ und $R^4$ | unabhängig voneinander je Wasserstoff, $C_1$-$C_4$-Alkyl, $C_1$-$C_4$-Alkoxy oder Chlor, |
| $R^5$ | Wasserstoff, Phenyl oder durch $C_1$-$C_4$-Alkyl, $C_1$-$C_4$-Alkoxy, Chlor, Nitro, -NH-$C_1$-$C_4$-Alkyl, oder CN substituiertes Phenyl, |
| $R^6$ | Wasserstoff oder unsubstituiertes $C_1$-$C_4$-Alkyl, |
| Y | -NH- oder -$NR^1$, |
| n | 2 oder 3 und |
| $An^{\ominus}$ | ein Anion. |

**16.** Verfahren zur Herstellung von kationischen Verbindungen der Formel (1) gemäss Anspruch gekennzeichnet, dass man 1 Mol einer Verbindung der Formel

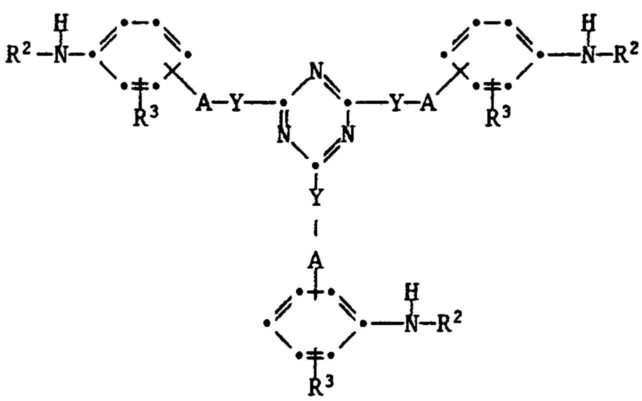

(5)

mit 1 bis 3 Mol einer Aldehydverbindung der Formel

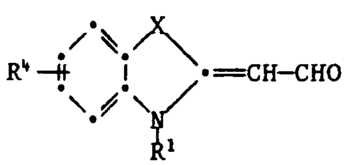

(6)

in Gegenwart einer Säure HAn kondensiert oder indem man 1 Mol einer Verbindung der Formel

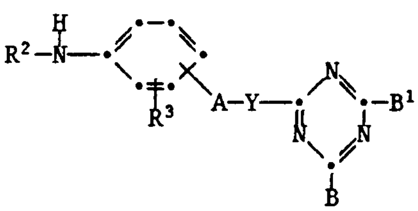

(8)

mit 1 Mol einer Aldehydverbindung der Formel (6) in Gegenwart einer Säure HAn kondensiert oder indem man 1 Mol einer Verbindung der Formel

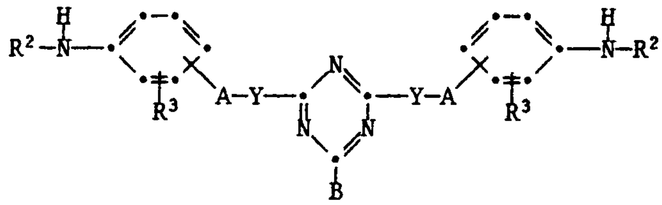

(9)

mit 2 Mol einer Aldehydverbindung der Formel (6) in Gegenwart einer Säure HAn kondensiert, wobei $R^1$, $R^2$, $R^3$, $R^4$, $R^5$, $R^6$, B, $B^1$, A, Y, und An die unter der Formel (1) angegebene Bedeutung aufweisen.

**17.** Verfahren gemäss Anspruch 16, dadurch gekennzeichnet, dass man 1 Mol einer Verbindung der Formel (5) mit 2,5 bis 2,99 Mol, insbesondere 2,8 bis 2,99 Mol eines Aldehyds der Formel (6) umsetzt.

**18.** Verwendung der kationischen Verbindungen der Formel (1) gemäss Anspruch 1 oder der gemäss Anspruch 16 erhaltenen kationischen Verbindungen als Farbstoffe zum Färben und Bedrucken von Textilmaterialien, Leder und Papier aller Arten.

**19.** Verwendung gemäss Anspruch 18 zum Färben und Bedrucken von Polyacrylnitrilmaterialien oder sauer modifizierten Polyester- oder Polyamidmaterialien, sowie natürlichen und regenerierten Cellulosematerialien.

**20.** Verwendung gemäss Anspruch 19 zum Färben und Bedrucken von ligninfreiem, gebleichtem und ungeleimtem Papier.

**21.** Die mit den kationischen Verbindungen gemäss Anspruch 1 behandelten, bzw. gefärbten und bedruckten Materialien.

## Claims

**1.** A cationic compound of formula

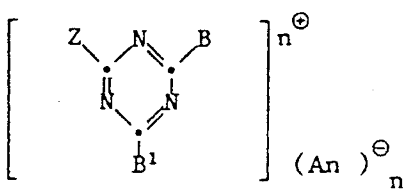

(1)

wherein

Z is a radical of formula

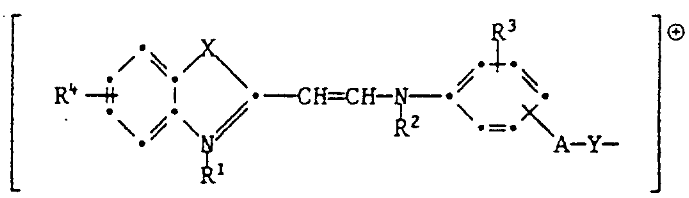

(2)

B and $B^1$ are each independently of the other a radical Z, a cationic radical different from Z or a radical of formula

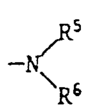

,

| | |
|---|---|
| $R^1$ | is, independently at each occurrence, unsubstituted or substituted $C_1$-$C_6$alkyl or $C_3$-$C_4$alkenyl, |
| $R^2$ | is, independently at each occurrence, unsubstituted or substituted $C_1$-$C_6$alkyl, |
| $R^3$ and $R^4$ | are each independently of the other hydrogen, unsubstituted or substituted $C_1$-$C_4$alkyl, unsubstituted or substituted $C_1$-$C_4$alkoxy, $NO_2$, unsubstituted or substituted acylamino, halogen or CN, |
| $R^5$ | is hydrogen, unsubstituted or substituted $C_1$-$C_6$alkyl, $C_3$-$C_6$alkenyl or aryl, |
| $R^6$ | is hydrogen, unsubstituted or substituted $C_1$-$C_6$alkyl, $C_3$-$C_6$alkenyl or aryl, or $R^5$ and $R^6$, together with the nitrogen linking them, are a heterocyclic radical, |
| X | is a sulfur atom or the group 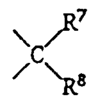 in which $R^7$ and $R^8$ are each independently of the other $C_1$-$C_6$alkyl or $C_3$-$C_4$alkenyl or can also be linked to each other to form a 5- or 6-membered carbocyclic ring, |
| A | is a direct bond, -NH-$C_1$-$C_4$alkylene, -O-$C_1$-$C_4$alkylene, $C_1$-$C_4$alkylene, phenylene, -O-phenylene or -NH-phenylene, |
| Y | is -NH-, -N$R^1$, -O- or -S-, |
| n | is 1, 2 or 3, and |
| $An^{\ominus}$ | is an anion. |

**2.** A cationic compound according to claim 1, wherein the cationic radical B and/or $B^1$ comprises one of the following structures:

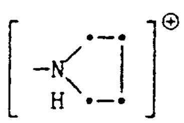 , 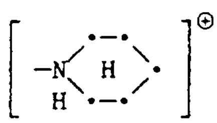 , 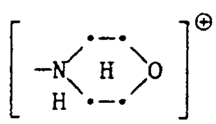 or 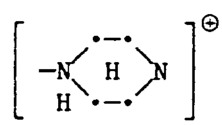

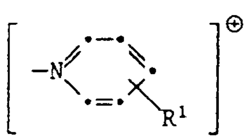 , 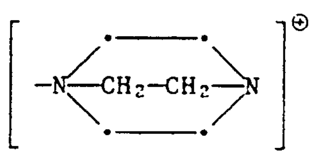 , $[-NH(CH_2)_p-N(R^1)_3]^{\oplus}$ ,

$[-NH(CH_2)_p-NH(R^1)_2]^{\oplus}$ , $[-N(R^1)_3]^{\oplus}$ or

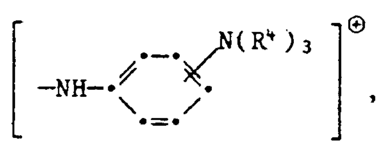 ,

wherein the substituents $R^1$ and $R^4$ have the given meanings and p is the number 2 or 3.

**3.** A cationic compound according to claim 1, wherein B and/or $B^1$ are/is a radical of formula

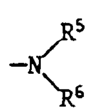 ,

in which $R^6$ is hydrogen and $R^5$ is hydrogen, phenyl or phenyl which is substituted by $C_1$-$C_4$alkyl, $C_1$-$C_4$alkoxy, chlorine, nitro, -NH-$C_1$-$C_4$alkyl or CN.

**4.** A cationic compound according to claim 1, wherein B and/or $B^1$ are/is a radical Z.

**5.** A cationic compound according to any one of claims 1 to 4, wherein $R^3$ and $R^4$ are each independently of the other hydrogen, an unsubstituted $C_1$-$C_4$alkyl or $C_1$-$C_4$alkoxy group, or halogen.

**6.** A cationic compound according to claim 5, wherein $R^3$ and $R^4$ are each independently of the other methyl, methoxy or chlorine.

**7.** A cationic compound according to any one of claims 1 to 6, wherein $R^1$ is an unsubstituted $C_1$-$C_4$alkyl group, preferably methyl.

**8.** A cationic compound according to any one of claims 1 to 7, wherein X is the group

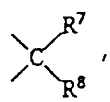

in which $R^7$ and $R^8$ are each independently of the other an unsubstituted $C_1$-$C_4$alkyl radical.

**9.** A cationic compound according to any one of claims 1 to 8, wherein $R^7$ and $R^8$ are methyl.

**10.** A cationic compound according to any one of claims 1 to 9, wherein $R^2$ is an unsubstituted $C_1$-$C_4$alkyl group or benzyl.

**11.** A cationic compound according to any one of claims 1 to 10, wherein A is a direct bond, -O-phenylene- or -NH-phenylene-.

**12.** A cationic compound according to claim 11, wherein A is a direct bond.

**13.** A cationic compound according to any one of claims 1 to 12, wherein Y is the -NH- or -$NR^1$-group.

**14.** A cationic compound according to any one of claims 1 to 13, wherein An is the formate, acetate, lactate, chloride, sulfate or phosphate ion.

**15.** A cationic compound of formula

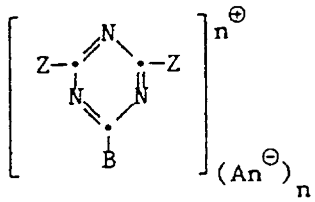

(3)

wherein

Z is a radical of formula

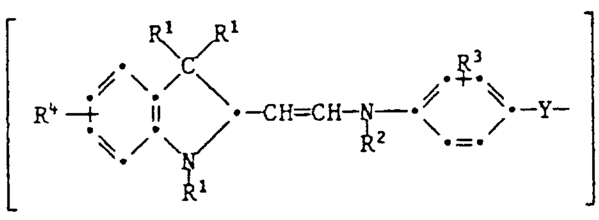

(4)

B is a radical Z or a radical of formula

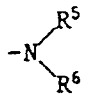,

| | |
|---|---|
| $R^1$ | is, independently at each occurrence, unsubstituted $C_1$-$C_4$alkyl, |
| $R^2$ | is unsubstituted $C_1$-$C_4$alkyl or benzyl, |
| $R^3$ and $R^4$ | are each independently of the other hydrogen, $C_1$-$C_4$alkyl, $C_1$-$C_4$alkoxy or chlorine, |
| $R^5$ | is hydrogen, phenyl or phenyl which is substituted by $C_1$-$C_4$alkyl, $C_1$-$C_4$alkoxy, chlorine, nitro, -NH-$C_1$-$C_4$alkyl or CN, |
| $R^6$ | is hydrogen or unsubstituted $C_1$-$C_4$alkyl, |
| Y | is -NH- or -$NR^1$-, |
| n | is 2 or 3, and |
| $An^{\ominus}$ | is an anion. |

**16.** A process for the preparation of a cationic compound of formula (1) according to claim 1, which comprises condensing 1 mol of a compound of formula

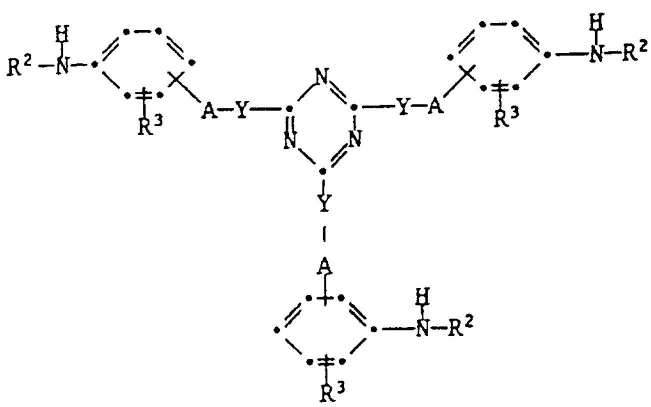

(5)

with 1 to 3 mol of an aldehyde compound of formula

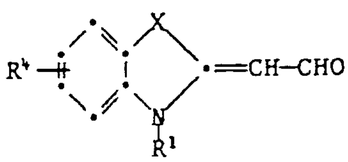

(6)

in the presence of an acid HAn, or by condensing 1 mol of a compound of formula

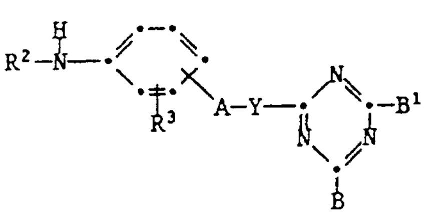

(8)

with 1 mol of an aldehyde compound of formula (6) in the presence of an acid HAn, or by condensing 1 mol of a compound of formula

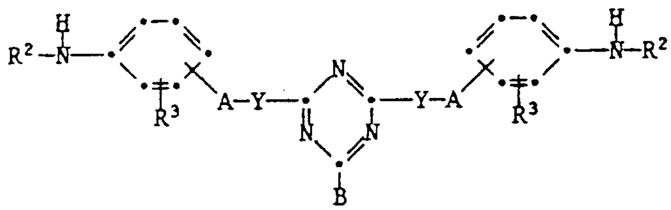

(9)

with 2 mol of an aldehyde compound of formula (6) in the presence of an acid HAn, in which $R^1$, $R^2$, $R^3$, $R^4$, $R^5$, $R^6$, B, $B^1$, A, Y and An are as defined for formula (1).

**17.** A process according to claim 16, which comprises reacting 1 mol of a compound of formula (5) with 2.5 to 2.99 mol, in particular 2.8 to 2.99 mol, of an aldehyde of formula (6).

**18.** The use of a cationic compound of formula (1) according to claim 1 or of a cationic compound obtained according claim 16 as dyes for dyeing or printing textile materials, leather and paper of all kinds.

**19.** The use according to claim 18 for dyeing or printing polyacrylonitrile materials or acid-modified polyester or polyamide materials as well as natural and regenerated cellulose materials.

**20.** The use according to claim 19 for dyeing or printing lignin-free, bleached and unsized paper.

**21.** A material treated, or dyed or printed, with a cationic compound according to claim 1.

**Revendications**

**1.** Composés cationiques de formule

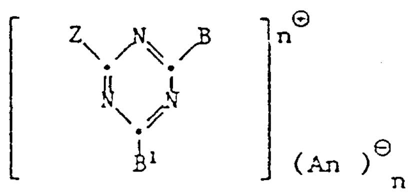

(1)

dans laquelle :
Z présente un groupe de formule

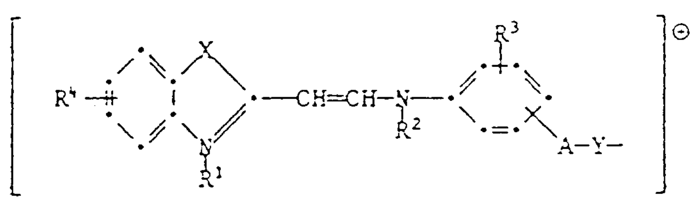

(2)

B et $B^1$ représentent chacun, indépendamment l'un de l'autre, un reste Z, un reste cationique différent de Z ou un reste de formule

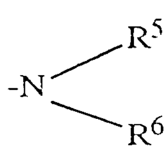

$R^1$ représente un groupe alkyle en $C_1$-$C_6$ ou alcényle en $C_3$-$C_4$, éventuellement substitué,
$R^2$ représente un groupe alkyle en $C_1$-$C_6$ éventuellement substitué,

$R^3$ et $R^4$ représentent chacun, indépendamment l'un de l'autre, un atome d'hydrogène, un groupe alkyle en $C_1$-$C_4$ éventuellement substitué, un groupe alcoxy en $C_1$-$C_4$ éventuellement substitué, un groupe $NO_2$, un groupe acylamino éventuellement substitué, un atome d'halogène ou un groupe CN,
$R^5$ représente un atome d'hydrogène ou un groupe alkyle en $C_1$-$C_6$, alcényle en $C_3$-$C_6$ ou aryle, éventuellement substitué,
$R^6$ représente un atome d'hydrogène ou un groupe alkyle en $C_1$-$C_6$, alcényle en $C_3$-$C_6$ ou aryle, éventuellement substitué, ou bien $R^5$ et $R^6$, conjointement avec l'atome d'azote qui les relie, forment un groupe hétérocyclique,
X représente un atome de soufre ou le groupe

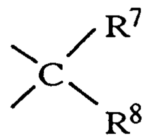,

dans lequel
$R^7$ et $R^8$ représentent chacun, indépendamment l'un de l'autre, un groupe alkyle en $C_1$-$C_6$ ou alcényle en $C_3$-$C_4$, ces groupes $R^7$ et $R^8$ pouvant également être raccordés l'un à l'autre en un carbocycle de 5 ou 6 chaînons,
A représente un liaison directe, ou un groupe -NH-alkylène en $C_1$-$C_4$, - O-alkylène en $C_1$-$C_4$, alkylène en $C_1$-$C_4$, phénylène, -O-phénylène ou - NH-phénylène,
Y représente -NH-, -NR¹-, -O- ou -S-,
n vaut 1, 2 ou 3 et
$An^-$ représente un anion.

**2.** Composés cationiques conformes à la revendication 1, caractérisés en ce que les restes cationiques B et/ou $B^1$ possèdent l'une des structures suivantes :

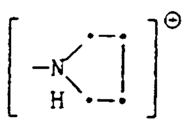 , 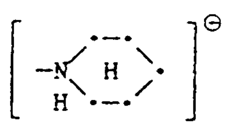 , 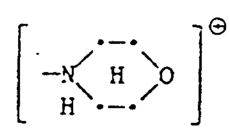 ou 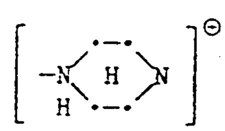

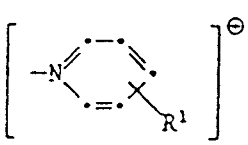 , 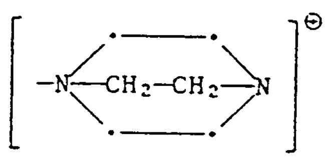 , $[-NH(CH_2)_p-N(R^1)_3]^{\oplus}$ ,

$[-NH(CH_2)_p-NH(R^1)_2]^{\oplus}$ , $[-N(R^1)_3]^{\oplus}$ ou

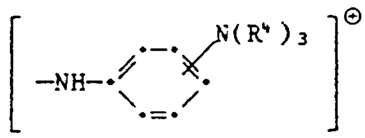,

dans lesquelles les substituants $R^1$ et $R^4$ ont les significations indiquées et p représente le nombre 2 ou 3.

**3.** Composés cationiques conformes à la revendication 1, caractérisés en ce que B et/ou $B^1$ représentent un reste de formule

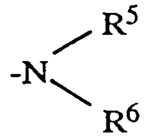

dans laquelle, $R^6$ représente un atome d'hydrogène et $R^5$ représente un atome d'hydrogène, un groupe phényle ou un groupe phényle substitué par alkyle en $C_1$-$C_4$, alcoxy en $C_1$-$C_4$, chloro, nitro, - NH-alkyle en $C_1$-$C_4$ ou -CN.

**4.** Composés cationiques conformes à la revendication 1, caractérisés en ce que B et/ou $B^1$ représentent un reste Z.

**5.** Composés cationiques conformes à l'une des revendications 1 à 4, caractérisés en ce $R^3$ et $R^4$ représentent chacun, indépendamment l'un de l'autre, un atome d'hydrogène ou d'halogène ou un groupe alkyle ou alcoxy en $C_1$-$C_4$ non substitué.

**6.** Composés cationiques conformes à la revendication 5, caractérisés en ce que $R^3$ et $R^4$ représentent chacun, indépendamment l'un de l'autre, un groupe méthyle, un groupe méthoxy ou un atome de chlore.

**7.** Composés cationiques conformes à l'une des revendications 1 à 6, caractérisés en ce que $R^1$ représente un groupe alkyle en $C_1$-$C_4$ non substitué, et surtout un groupe méthyle.

**8.** Composés cationiques conformes à l'une des revendications 1 à 7, caractérisés en ce que X représente le groupe

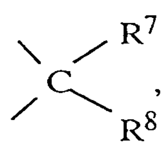

dans lequel $R^7$ et $R^8$ représentent chacun, indépendamment l'un de l'autre, un groupe alkyle en $C_1$-$C_4$ non substitué.

**9.** Composés cationiques conformes à l'une de revendications 1 à 8, caractérisés en ce que $R^7$ et $R^8$ représentent des groupes méthyle.

**10.** Composés cationiques conformes à l'une des revendications 1 à 9, caractérisés en ce que $R^2$ représente un groupe alkyle en $C_1$-$C_4$ ou benzyle, non substitué.

**11.** Composés cationiques conformes à l'une des revendications 1 à 10, caractérisés en ce que A représente une liaison directe ou un groupe -O-phénylène ou -NH-phénylène.

**12.** Composés cationiques conformes à la revendication 11, caractérisés en ce que A représente une liaison directe.

**13.** Composés cationiques conformes à l'une des revendications 1 à 12, caractérisés en ce que Y représente un groupe -NH- ou -$NR^1$-.

**14.** Composés cationiques conformes à l'une des revendications 1 à 13, caractérisés en ce que An représente un ion formiate, acétate, lactate, chlorure, sulfate ou phosphate.

**15.** Composés cationiques de formule

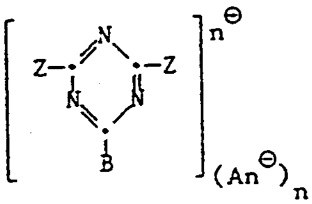

(3)

dans laquelle :
Z représente un reste de formule

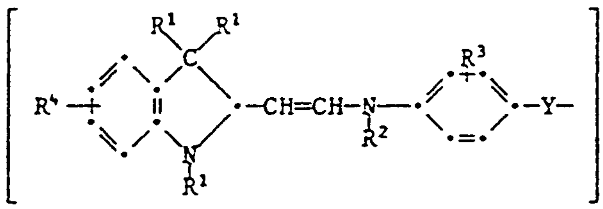

(4)

B représente un reste Z ou un reste de formule

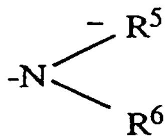

les $R^1$ représentent, indépendamment l'un de l'autre, des groupes alkyle en $C_1$-$C_4$ non substitué,
$R^2$ représente un groupe alkyle en $C_1$-$C_4$ ou benzyle, non substitué,
$R^3$ et $R^4$ représentent chacun, indépendamment l'un de l'autre, un atome d'hydrogène ou de chlore ou un groupe alkyle en $C_1$-$C_4$ ou alcoxy en $C_1$-$C_4$,
$R^5$ représente un atome d'hydrogène, un groupe phényle ou un groupe phényle substitué par alkyle en $C_1$-$C_4$, alcoxy en $C_1$-$C_4$, chloro, nitro, -NH-alkyle en $C_1$-$C_4$, ou -CN,
$R^6$ représente un atome d'hydrogène ou un groupe alkyle en $C_1$-$C_4$ non substitué,
Y représente -NH- ou -$NR^1$-
n vaut 2 ou 3 et
$An^-$ représente un anion.

**16.** Procédé de préparation de composés cationiques de formule (1) conformes à la revendication 1, caractérisé en ce que l'on condense une mole d'un composé de formule

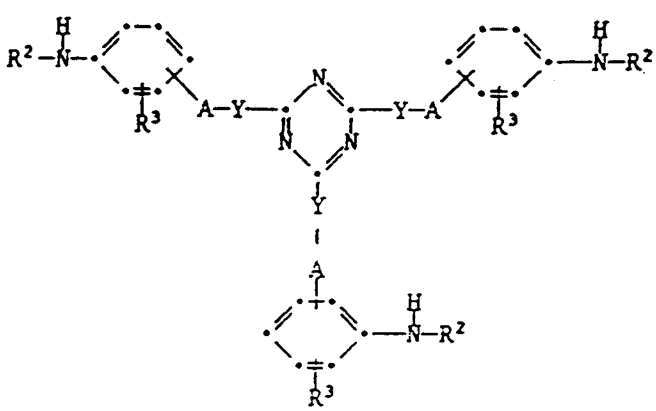

(5)

avec 1 à 3 moles d'un aldéhyde de formule

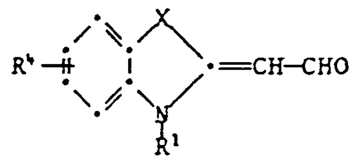 (6)

en présence d'un acide HAn, ou bien l'on condense 1 mole d'un composé de formule

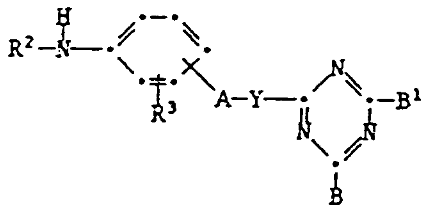 (8)

avec 1 mole d'un aldéhyde de formule (6), en présence d'un acide HAn, ou bien l'on condense 1 mole d'un composé de formule

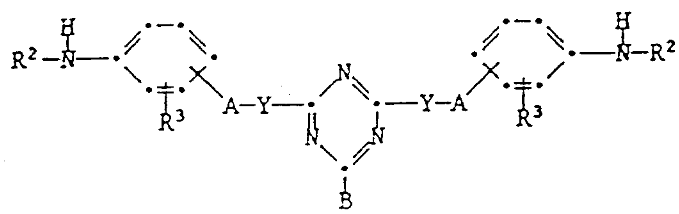 (9)

avec 2 moles d'un aldéhyde de formule (6), en présence d'un acide HAn, $R^1$, $R^2$, $R^3$, $R^4$, $R^5$, $R^6$, B, $B^1$, A, Y et An ayant les significations indiquées à propos de la formule (I).

**17.** Procédé conforme à la revendication 16, caractérisé en ce que l'on fait réagir 1 mole d'un composé de formule (5) avec 2,5 à 2,99 moles, et en particulier de 2,8 à 2,99 moles, d'un aldéhyde de formule (6).

**18.** Utilisation des composés cationiques de formule (I) conformes à la revendication 1, ou des composés cationiques obtenus conformément à la revendication 16, en tant que colorants pour la teinture et l'impression de matériaux textiles, cuirs et papiers de toutes sortes.

**19.** Utilisation conforme à la revendication 18, pour la teinture et l'impression de matériaux en polyacrylonitrile ou de matériaux en polyester ou en polyamide modifiés par un acide, ou encore de matériaux en cellulose naturelle ou régénérée.

**20.** Utilisation conforme à la revendication 19 pour la teinture et l'impression de papier exempt de lignine, blanchi et non encollé.

**21.** Matériau traité, c'est-à-dire teint ou imprimé, avec les composés cationiques conformes à la revendication 1.